# EUROPÄISCHE PATENTSCHRIFT

(11) **EP 0 978 341 B1**
(45) Veröffentlichungstag und Bekanntmachung des Hinweises auf die Patenterteilung: **24.08.2005**
(21) Anmeldenummer: 99107604.3
(22) Anmeldetag: 16.04.1999
(51) Int. Cl.: B23D 49/00, B23D 59/00

(54) **Dekupiersäge**
Jigsaw
Scie à chantourner

(30) Priorität: 05.08.1998 LU 90272
(43) Veröffentlichungstag der Anmeldung: 09.02.2000
(73) Patentinhaber: PROXXON S.A., 6868 Wecker (LU)
(72) Erfinder: Zapf, Jürgen, 54528 Salmtal (DE)
(74) Vertreter: Schmitt, Armand

(56) Entgegenhaltungen:
- DE-C- 68 662
- DE-C- 3 930 532
- US-A- 1 467 720
- US-A- 2 165 002
- US-A- 2 327 239

## Beschreibung

Die vorliegende Erfindung betrifft eine Dekupiersäge gemäß dem Oberbegriff des Anspruchs 1. Dekupiersägenwerden insbesondere für präzise Kurvenschnitte eingesetzt. Sie umfassen ein Basisgehäuse das zum Beispiel auf einer Werkbank aufstellbar ist und u.a. als Tragstruktur für eine Arbeitsplatte dient. Ein am Basisgehäuse befestigter Sägearm erstreckt sich über die Arbeitsplatte und trägt eine obere Sägeblatt-Einspanneinheit. Im Basisgehäuse unterhalb der Arbeitsplatte ist senkrecht unter der oberen Sägeblatt-Einspanneinheit ist eine untere Sägeblatt-Einspanneinheit angeordnet. Ein Laubsägeblatt ist zwischen der unteren und oberen Sägeblatt-Einspanneinheit eingespannt und erstreckt sich durch eine Öffnung in der Arbeitsplatte. Bei Dekupiersägen einer ersten Bauart weist die untere Sägeblatt-Einspanneinheit einen elektrischen Hubantrieb auf. In die obere Sägeblatt-Einspanneinheit ist hierbei ein passiver Hubteil integriert, so daß der Hubantrieb eine alternierende Hubbewegung auf das Sägeblatt übertragen kann. Eine solche Dekupiersäge wird zum Beispiel von der Anmelderin unter der Bezeichnung "MINIMOT® Dekupiersäge DS 220/E" vertrieben. Andere Dekupiersägen weisen einen um eine horizontale Achse schwenkbar gelagerten Sägearm auf, der mit einem Antrieb verbunden ist um die Hubbewegungen des Sägeblatts zu erzeugen.

Das zu sägende Werkstück wird auf die Arbeitsplatte der Dekupiersäge aufgelegt und von Hand leicht gegen das Laubsägeblatt gedrückt. Es kann von Hand frei auf der Arbeitsplatte geführt werden, so daß auch komplizierte Kurvenschnitte präzise ausgeführt werden können. Zusätzlich kann die Dekupiersäge einen höhenverstellbaren Führungsschuh umfassen, der das Sägeblatt auf dem Werkstück umgibt. Es ist ebenfalls bekannt, eine Blasvorrichtung in die Dekupiersäge einzubauen, und die Blasluft über flexible Luftleitungen bis an die Schnittstelle heranzuführen um die Sägespäne wegzublasen und so eine freie Sicht auf die Schnittlinie zu gewährleisten.

Die maximale Schnittleistung der Dekupiersäge, d.h. die maximale Materialstärke die theoretisch auf der Dekupiersäge gesägt werden kann, entspricht der Distanz zwischen oberer Sägeblatt-Einspanneinheit und Arbeitsplatte minus dem Hub. Es versteht sich jedoch von selbst, daß die maximale Schnittleistung nur bei sehr weichen Werkstoffen voll ausgenützt werden kann. Bei härteren Werkstoffen ist die maximale Materialstärke die gesägt werden kann natürlich weitaus kleiner als die maximale Schnittleistung. Hieraus ergibt sich, daß im Gegensatz zu einer Bandsäge oder einer Kreissäge, bei einer Dekupiersäge das eingespannte Sägeblatt meist nur in einem sehr kleinen Abschnitt, d.h. mit einem kleinen Bruchteil seiner Zähne benutzt wird. Sind die Zähne im Schnittbereich, dessen Ausdehnung durch die Materialstärke des Werkstücks und den Hub des Sägeblattes festgelegt ist, verschlissen, so muß das Sägeblatt ersetzt werden, obschon ein Großteil der Zähne noch unbenutzt ist.

Aus der DE 39 30 532 ist eine Laubsäge bekannt, in der ein Sägearm sich über die Arbeitsplatte erstreckt, wo er einen vertikalen Flansch ausbildet. An diesem Flansch ist ein Sägeblatthalter zum Einspannen des oberen Endes des Laubsägeblattes angeordnet. Der Sägeblatthalter verfügt über ein Gehäuse,, das mit einem unteren Fortsatz versehen ist. Der Fortsatz ist an der Vorderseite des vertikalen Flansches geführt, beispielsweise in einer Nut/Feder-Führung und mittels einer Schraube fixierbar, die durch ein Langloch hindurchgreift, das sich in vertikaler Richtung erstreckt. Beim Einspannen eines Sägeblattes wird der Sägeblatthalter in einer Stellung am Flansch fixiert, in der das Laubsägeblatt die gewünschte Vorspannung hat. Zudem weist der Sägeblatthalter eine verdrehbare Buchse auf, mittels der ein gewünschter Verschränkungswinkel des Sägeblattes eingestellt werden kann. Hierdurch soll ein Verlaufen von gerade zu führenden Sägeschnitten vermieden werden.

Der vorliegenden Erfindung liegt u.a. die Aufgabe zu Grunde, eine einfache Dekupiersäge zu schaffen, die dem Benutzer die Möglichkeit gibt, seine Sägeblätter besser auszunutzen. Diese Aufgabe wird durch eine Dekupiersäge nach Anspruch 1 gelöst.

In der erfindungsgemäßen Dekupiersäge ist die obere Sägeblatt-Einspanneinheit am Sägearm in mindestens zwei unterschiedlichen Höhen über der Arbeitsplatte befestigbar. Hierdurch hat der Benutzer der Dekupiersäge die Möglichkeit nach Abnutzung der Sägezähne in einem Abschnitt des Sägeblattes, den Schnittbereich in einen anderen Abschnitt des Sägeblatts zu verlegen, in dem die Zähne noch intakt sind. Der Verbrauch an Sägeblättern kann somit deutlich reduziert werden. Zusätzlich läßt sich der Abstand zwischen unterer und oberer Sägeblatt-Einspanneinheit, d.h. die Länge des Sägeblattes, an die Materialstärke anpassen. Ein Sägeblatt das nur leicht länger als die zu sägende Materialstärke plus Hub ist, erlaubt präzisere Schnitte als ein wesentlich längeres Sägeblatt, das sich bei Druck leichter durchbiegen oder verdrehen läßt. Besonders beim Sägen von engen Radien, bringt ein verkürztes Sägeblatt deutlich mehr Präzision, in dem die Tendenz des Sägeblattes sich mit dem Werkstück zu verdrehen wesentlich reduziert wird. Das gleiche gilt auch für Sägeschnitte in Werkstoffen mit unterschiedlich harten Fasern.

Es ist selbstverständlich nicht ausgeschlossen, die Befestigung der oberen Sägeblatt-Einspanneinheit an dem Sägearm derart zu gestalten, daß die Höhe der oberen Sägeblatt-Einspanneinheit über der Arbeitsplatte, zumindest in einem gewissen Bereich, kontinuierlich verstellbar ist.

Der Hubantrieb ist vorteilhaft ein Bestandteil der unteren Sägeblatt-Einspanneinheit. Die obere Sägeblatt-Einspanneinheit umfaßt dann vorteilhaft einen am Sägearm höhenverstellbar befestigten Gehäuseblock, in den ein passiver Hubteil und eine Spannvorrichtung für das Sägeblatt integriert sind.

In einer alternativen Ausgestaltung der Dekupiersäge ist der Sägearm schwenkbar gelagert und mit einem Antrieb verbunden um die Hubbewegungen des Sägeblattes zu erzeugen. Die verstellbare obere Sägeblatt-Einspanneinheit ist dann an dem schwenkbar gelagerten Sägearm höhenverstellbar befestigt.

Zumindest eine der beiden Sägeblatt-Einspanneinheiten weist als Befestigungsvorrichtung für das Sägeblatt vorteilhaft eine Klemmvorrichtung auf, so daß zum Beispiel das abgenützte untere Teilstück des Sägeblattes einfach abgetrennt und das verkürzte Sägeblatt anschließend problemlos wieder die in die untere Sägeblatt-Einspanneinheit eingeklemmt werden kann.

In einer vorteilhaften Ausgestaltung der Dekupiersäge ist in die obere Sägeblatt-Einspanneinheit ein Blasebalg derart eingebaut, daß er durch die alternierende Hubbewegung der Dekupiersäge betätigt wird. Falls die Dekupiersäge zum Beispiel ein passives Hubteil in der oberen Sägeblatt-Einspanneinheit aufweist, wird der Blasebalg zum Beispiel durch die Hubbewegung dieses passiven Hubteils betätigt. Ein zusätzlicher Antrieb für die Blasvorrichtung und/oder lange Luftleitungen entfallen mit dieser Lösung.

Eine Dekupiersäge mit einer solchen Blasvorrichtung weist dann vorteilhaft einen Führungsschuh mit einem als Rohr ausgebildeten Schaft auf, der mit dem Blasebalg verbunden ist. Über diesen Hohlschaft wird die von der Blasvorrichtung erzeugte Blasluft in den Führungsschuh eingespeist, um denselben durch einen Luftauslaß in Richtung Sägeblatt zu verlassen. Der so erzeugte Luftstrahl bläst das Sägemehl an der Schnittstelle weg, so daß stets für freie Sicht auf das Werkstück und die (vorgezeichnete) Schnittlinie gesorgt ist. Störende Luftleitungen werden bei dieser Ausführung völlig vermieden.

Ein Ausführungsbeispiel der Erfindung wird anhand der beiliegenden Zeichnungen näher beschrieben. Es zeigen:
- Figur 1:: eine perspektivische Ansicht einer erfindungsgemäßen Dekupiersäge in einer ersten Arbeitsstellung;
- Figur 2:: eine perspektivische Ansicht der Dekupiersäge nach Figur 1, in einer zweiten Arbeitsstellung;
- Figur 3:: eine Explosionszeichnung der unteren Sägeblatt-Einspanneinheit der Dekupiersäge nach Figur 1;
- Figur 4:: einen Schnitt durch eine vorteilhafte Ausgestaltung einer erfindungsgemäßen Dekupiersäge.

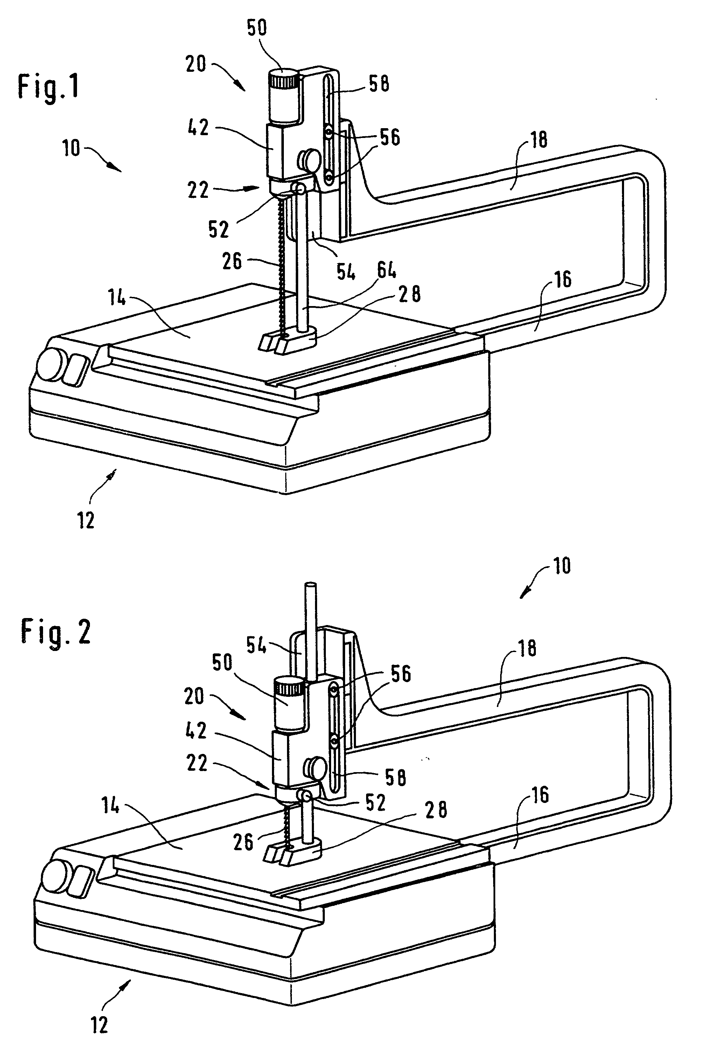

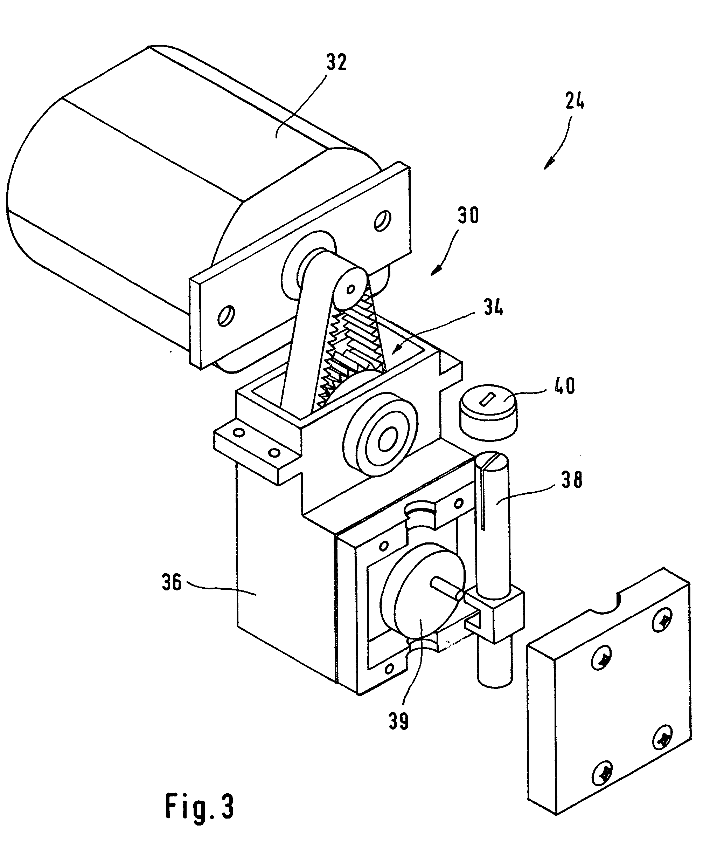

Die in Figur 1 und 2 dargestellte Dekupiersäge 10 umfaßt ein Basisgehäuse 12, das zum Beispiel auf eine Werkbank aufsetzbar ist. Dieses Basisgehäuse 12 dient u.a. als Tragstruktur für eine Arbeitsplatte 14, auf die das zu sägende Werkstück aufgelegt wird. Ein aus dem Basisgehäuse 12 herausragender Bügel 16 bildet einen Sägearm 18 aus, der über die Arbeitsplatte 14 ragt und hier einen Kopfteil 20 aufweist. Letzterer trägt eine obere Sägeblatt-Einspanneinheit, die global mit dem Bezugszeichen 22 bezeichnet ist. Senkrecht unter der oberen Sägeblatt-Einspanneinheit 22 ist im Basisgehäuse 12 unterhalb der Arbeitsplatte 14 eine untere Sägeblatt-Einspanneinheit angeordnet, die in Figur 3 dargestellt ist und global mit dem Bezugszeichen 24 bezeichnet ist. In den Figuren 1 und 2 wird diese untere Sägeblatt-Einspanneinheit 24 durch die Arbeitsplatte 14 verdeckt. Ein Laubsägeblatt 26 ist in der unteren und oberen Sägeblatt-Einspanneinheit 22, 24 eingespannt und erstreckt sich hierbei durch eine Öffnung in der Arbeitsplatte 14. In den Figuren 1 und 2 ist diese Öffnung durch einen höhenverstellbaren Führungsschuh 28 für das Werkstück verdeckt.

Wie aus Figur 3 ersichtlich ist umfaßt die untere Sägeblatt-Einspanneinheit 24 einen an sich bekannten Hubantrieb 30, mit einem elektrischen Motor 32 und einem Exzentergetriebe 34. In dem Getriebegehäuse 36 ist ein Hubstift 38 vertikal geführt und wird durch eine Exzenterscheibe 39 einer alternierenden, vertikalen Hubbewegung unterworfen. Dieser Hubstift 38 weist an seinem oberen Ende eine an sich bekannte Klemmvorrichtung 40 für das untere Ende des Sägeblattes 26 auf.

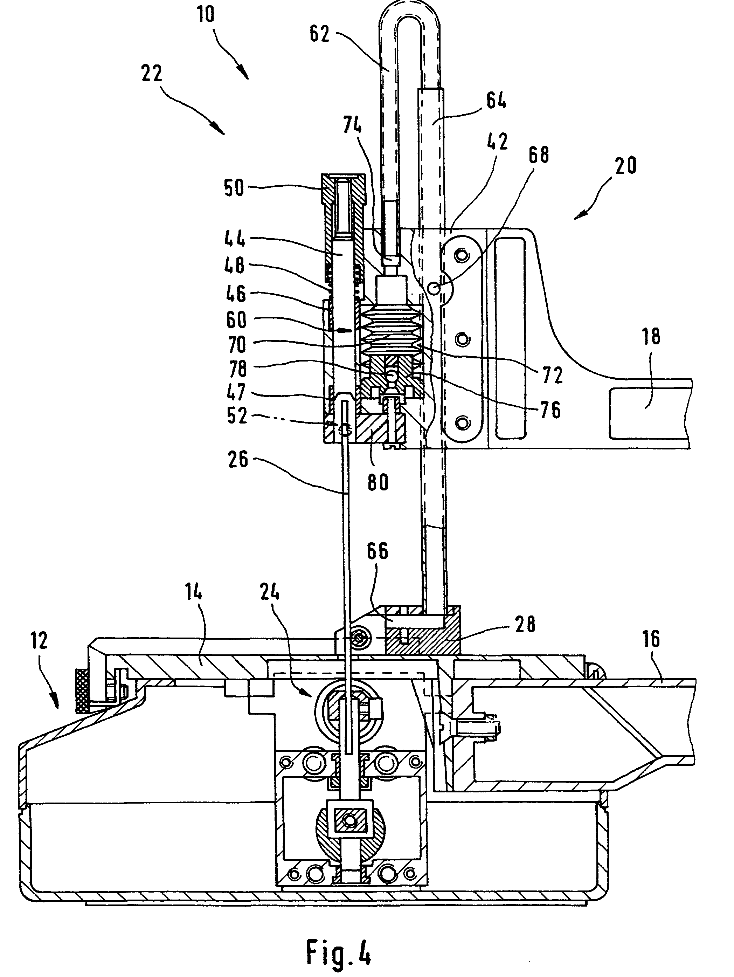

Die obere Sägeblatt-Einspanneinheit 22 wird anhand der Figur 4 näher beschrieben. Sie umfaßt einen Gehäuseblock 42 in den ein passiver Hubteil, mit Hubstift 44, Führungsbuchsen 46, 47 und Gegenfeder 48, sowie eine Spannvorrichtung mit einer Spannschraube 50 für das Sägeblatt integriert sind. Der Hubstift 44 ist in seinen Führungsbuchse 46, 47 in vertikaler Richtung relativ zum Gehäuseblock 42 gegen die Gegenfeder 48 nach unten verschiebbar. An seinem unteren Ende weist der Hubstift 44 eine Klemmvorrichtung 52 auf, in die das obere Ende des Sägeblattes 26 eingeklemmt wird. Die in die obere Sägeblatt-Einspanneinheit 22 integrierte Spannvorrichtung 50 ermöglicht es dem Benutzer die vertikale Position des Hubstifts im Gehäuseblock 42 zu verstellen und hierdurch in bekannter Weise die auf das Sägeblatt 26 ausgeübte Spannkraft einzustellen.

Wie aus den Figuren 1 und 2 ersichtlich ist die Distanz zwischen der Arbeitsplatte 14 und der oberen Sägeblatt-Einspanneinheit 22 verstellbar. Dies wird vorzugsweise dadurch ermöglicht, daß die obere Sägeblatt-Einspanneinheit 22 am Kopfteil 20 des Sägearms 18 in verschiedenen Höhen über der Arbeitsplatte 14 befestigbar ist. Hierzu weist der Kopfteil 20 vorteilhaft ein vertikal angeordnetes Winkelprofil 54 auf, an dem die obere Sägeblatt-Einspanneinheit 22 in unterschiedlichen Höhen festgeklemmbar ist. Das Winkelprofil 54 bildet hierbei eine Art vertikale Führungsschiene aus, an dem der Gehäuseblock 42 mit seiner Rückfläche und einer Seitenfläche anliegt, wodurch beim Verstellen der oberen Sägeblatt-Einspanneinheit 22 eine einfache und genaue Ausrichtung gewährleistet ist. Das Festklemmen der oberen Sägeblatt-Einspanneinheit 22 am Winkelprofil 54 kann, wie in den Figuren 1 und 2 gezeigt, mittels Schrauben 56 erfolgen, die in Gewindelöcher im seitlichen Flansch des Winkelprofils 54 einschraubbar sind und mit ihrem Kopf an seitlichen Schulterflächen in einem vertikalen Schlitz 58 des Gehäuseblocks 42 anliegen. Werden die Schrauben 56 gelöst, so läßt sich der Gehäuseblocks 42 in seiner Führungsschiene 54 nach unten, bzw. oben verschieben.

In der Figur 1 ist die Distanz zwischen der Arbeitsplatte 14 und der oberen Sägeblatt-Einspanneinheit 22 am größten. Das Sägeblatt 26 weist hierbei seine größte Länge auf. In der Figur 2 ist die Distanz zwischen der Arbeitsplatte 14 und der oberen Sägeblatt-Einspanneinheit 22 am kleinsten, und das Sägeblatt 26 weist seine kleinste Länge auf. Zwischen diesen beiden extremen Positionen kann die Höhe der oberen Sägeblatt-Einspanneinheit 22 über der Arbeitsplatte 14, und folglich auch die Länge des Sägeblattes 26, durch Verschieben des Gehäuseblocks 42 entlang dem Winkelprofil 54 stufenlos eingestellt werden.

Wie bereits oben erläutert, bringt eine solche Dekupiersäge 10 mannigfaltige Vorteile. Sie gibt dem Benutzer der Dekupiersäge zum Beispiel die Möglichkeit nach Abnutzung der Sägezähne am unteren Endes des Sägeblattes 26, den Schnittbereich näher zum oberen Ende des Sägeblattes 26 hin zu verlegen, wo die Sägezähne noch intakt sind, und somit den Verbrauch an Sägeblättern deutlich zu reduzieren. Hierzu braucht lediglich das untere Ende des Sägeblattes 26 aus der unteren Festklemmvorrichtung 40 entnommen zu werden, der abgenutzte untere Teil des Sägeblattes 26 abgetrennt zu werden, die vertikale Position der oberen Sägeblatt-Einspanneinheit 22 auf die neue Sägeblattlänge eingestellt zu werden, und das Sägeblatt 26 wieder in die untere Festklemmvorrichtung 40 eingeklemmt zu werden, um anschließend mittels der Spannvorrichtung in der oberen Sägeblatt-Einspanneinheit 22 gespannt zu werden. Der Benutzer der Dekupiersäge 10 kann jedoch ebenfalls die Sägeblattlänge an die Materialstärke des zu sägenden Werkstückes anpassen. Durch eine Verkürzung der Länge des Sägeblatts wird dessen Tendenz zum Durchbiegen und Verdrehen beim Sägen reduziert, was sich positiv auf die Schnittqualität auswirkt und auch kleinere Schnittradien erlaubt.

Mit dem Bezugszeichen 60 ist in Figur 4 eine in den Gehäuseblock 42 integrierte Blasvorrichtung bezeichnet. Letztere ist über eine flexible Rohrleitung 62 mit einem als Rohr ausgebildeten Schaft 64 am Führungsschuh 28 verbunden. Über diesen Hohlschaft 64 wird die von der Blasvorrichtung 60 erzeugte Luft in den Führungsschuh 28 eingespeist. Aus dem Führungsschuh 28 tritt die Blasluft über einen Luftauslaß 66 in Richtung Sägeblatt 26 aus. Sie sorgt für freie Sicht auf das Werkstück und die (vorgezeichnete) Schnittlinie, indem sie das Sägemehl von der Schnittstelle wegbläst. Der Hohlschaft 64, der gleichzeitig als Befestigungsschaft des Führungsschuhs 28 dient, ist in einer Durchgangsbohrung im Gehäuseblock 42 mittels einer Klemmschraube höhenverstellbar befestigt, so daß die Höhe des Führungsschuhs 28 über der Arbeitsplatte 14 kontinuierlich an die Dicke des zu sägenden Werkstücks angepaßt werden kann.

Die Blasvorrichtung 60 umfaßt einen Blasebalg 70 der in eine Kammer 72 des Gehäuseblocks 42 eingebaut ist. Ein Ende des Blasebalgs 70 ist mit einem Luftauslaßkanal 74 verbunden an den die flexible Rohrleitung 62 angeschlossen ist. Das andere Ende des Blasebalgs 70 ist mit einem Kopfstück 76 verschlossen, das in der Kammer 72 parallel zur Hubbewegung des Hubstifts 44 verschiebbar geführt ist. In dieses Kopfstück 76 ist ein Rückschlagventil 78 eingebaut. Eine Verbindungsvorrichtung 80 verbindet das Kopfteil 76 mit dem Hubstift 44. Wird der Hubstift 44 nach unten bewegt, so wird der Blasebalg 70 gedehnt und Luft strömt über das Rückschlagventil 78 in den Blasebalg 70 ein. Wird der Hubstift nach oben bewegt, so wird die Luft im Blasebalg 70 komprimiert. Die als Rückschlagventil dienende Kugel 78 wird hierbei in ihren Sitz gepreßt, so daß die komprimierte Luft den Blasebalg 70 über den Luftauslaßkanal 74 verlassen muß.

## Patentansprüche

1. Dekupiersäge, umfassend:
eine Tragstruktur (12) zum Aufstellen der Dekupiersäge;
eine Arbeitsplatte (14) die von der Tragstruktur (12) getragen wird;
einen Sägearm (18) der von der Tragstruktur (12) getragen wird und sich
über die Arbeitsplatte (14) erstreckt, wo er eine vertikale Führungsschiene ausbildet;
eine obere Sägeblatt-Einspanneinheit (22) mit einem Gehäuseblock (42) der an der vertikalen Führungsschiene des Sägearms (18) in unterschiedlichen Höhen festklemmbar ist;
eine untere Sägeblatt-Einspanneinheit (24) die unterhalb der Arbeitsplatte (14) angeordnet ist;
ein Sägeblatt (26) das in der unteren und oberen Sägeblatt-Einspanneinheit (22 und 24) eingespannt ist und sich durch eine Öffnung in der Arbeitsplatte (14) erstreckt; und
einen Antrieb (30) zum Erzeugen einer alternierenden Hubbewegung des Sägeblattes (26);
**dadurch gekennzeichnet, daß**
die Führungsschiene durch ein senkrechtes Winkelprofil (54) mit einem seitlichen Flansch ausgebildet wird, und der Gehäuseblock (42) in unterschiedlichen Höhen an diesem seitlichen Flansch des Winkelprofils (54) festklemmbar ist, so dass unterschiedliche Einspannlängen für das Sägeblatt eingestellt werden können.

2. Dekupiersäge nach Anspruch 1, **dadurch gekennzeichnet, daß** der Gehäuseblock (42) an dem seitlichen Flansch des Winkelprofils (54) stufenlos festklemmbar ist.

3. Dekupiersäge nach einem der Ansprüche 1 oder 2, **dadurch gekennzeichnet, daß** mindestens eine Sägeblatt-Einspanneinheit (22, 24) eine Klemmvorrichtung (40) für die Befestigung des Sägeblattes (26) aufweist.

4. Dekupiersäge nach einem der Ansprüche 1 bis 3, **dadurch gekennzeichnet, daß**
die untere Sägeblatt-Einspanneinheit (24) den Hubantrieb (30) umfaßt, und
in den Gehäuseblock (42) ein passiver Hubteil integriert ist, wobei das obere Ende des Sägeblattes (26) an diesem passiven Hubteil befestigt ist.

5. Dekupiersäge nach Anspruch 4, **dadurch gekennzeichnet, daß** der passive Hubteil einen Hubstift (44), mindestens eine Führungsbuchse (46, 47) für den Hubstift (44), und eine Gegenfeder (48) aufweist, wobei das obere Ende des Sägeblattes (26) an dem Hubstift (44) befestigt ist.

6. Dekupiersäge nach Anspruch 4 oder 5, **dadurch gekennzeichnet, daß** in den Gehäuseblock (42) weiterhin eine Spannschraube (50) für das Sägeblatt (26) integriert ist.

7. Dekupiersäge nach einem der Ansprüche 1 bis 6, **dadurch gekennzeichnet, daß** in die obere Sägeblatt-Einspanneinheit (22) ein Blasebalg (70) derart eingebaut ist, daß er durch die alternierende Hubbewegung des Sägeblatts (26) betätigt wird.

8. Dekupiersäge nach Anspruch 7, **gekennzeichnet durch** einen Führungsschuh (28) mit einem als Rohr ausgebildeten Schaft (64), der mit dem Blasebalg (70) verbunden ist, wobei der Führungsschuh (28) einen Luftauslaß (66) in Richtung Sägeblatt 26 aufweist.

## Claims

1. a supporting structure (12) for mounting the fretsaw;
a working plate (14) supported by the supporting structure (12);
a saw arm (18) supported by the supporting structure (12) and extending over the working plate (14), where it forms a vertical guide rail;
an upper saw blade tensioning unit (22) with a housing block (42) that can be clamped to the vertical guide rail of the saw arm (18) at different heights:
a lower saw blade tensioning unit (24) positioned underneath the working plate (14);
a saw blade (26) mounted between the upper and lower saw blade tensioning units (22 and 24) and passing through an opening in the working plate (14); and
a drive (30) to generate an alternating stroke motion of the saw blade (26);
**characterized in that**
the guide rail is formed by a piece of vertical angle section (54) with a lateral flange, and the housing block (42) can be clamped to this lateral flange of the angle section (54) at different heights so that different tensioning lengths can be set for the saw blade.

2. Fretsaw according to Claim 1, **characterized in that** the housing block (42) can be clamped to the lateral flange of the angle section (54) in continuously adjustable manner.

3. Fretsaw according to one of Claims 1 or 2, **characterized in that** at least one saw blade tensioning unit (22, 24) possesses a clamping device (40) to fix the saw blade (26).

4. Fretsaw according to one of Claims 1 to 3, **characterized in that** the lower saw blade tensioning unit (24) comprises the stroke drive (30), and a passive stroke part is incorporated in the housing block (42), the upper end of the saw blade (26) being fixed to this passive stroke part.

5. Fretsaw according to Claim 4, **characterized in that** the passive stroke part possesses a stroke rod (44), at least one guide bush (46, 47) for the stroke rod (44) and a counterspring (48), the upper end of the saw blade (26) being fixed to the stroke rod (44).

6. Fretsaw according to Claim 4 or 5, **characterized in that** the housing block (42) also incorporates a tensioning screw (50) for the saw blade (26).

7. Fretsaw according to one of Claims 1 to 6, **characterized in that** a blower bellows (70) is incorporated into the upper tensioning unit (22) in such a way that it is actuated by the alternating stroke motion of the saw blade (26).

8. Fretsaw according to Claim 7, **characterized by** a guide shoe (28) with a shaft (64) in the form of a tube and connected to the blower bellows (70), the guide shoe (28) being equipped with an air outlet (66) directed towards the saw blade (26).

## Revendications

1. Scie à chantourner, comprenant :
une structure porteuse (12) pour l'installation de la scie à chantourner ;
un plan de travail (14) porté par la structure porteuse (12) ;
un bras de scie (18) porté par la structure porteuse (12) et qui s'étend sur le plan de travail (14), où il forme un rail de guidage vertical ;
une unité de serrage de lame de scie (22) supérieure munie d'un bloc-carter (42), qui peut être serré à différentes hauteurs sur le rail de guidage vertical du bras de scie (18) ;
une unité de serrage de lame de scie (24) inférieure disposée sous le plan de travail (14) ;
une lame de scie (26) fixée dans l'unité de serrage de lame de scie supérieure et inférieure (22 et 24) et qui s'étend à travers une ouverture ménagée dans le plan de travail (14) ; et
un moteur (30) pour générer un mouvement de course alternative de la lame de scie (26) ;
**caractérisée en ce que**
le rail de guidage est formé par une cornière verticale (54) munie d'une aile latérale et **en ce que** le bloc-carter (42) peut être serré à différentes hauteurs sur cette aile latérale de la cornière (54), de manière à pouvoir régler différentes longueurs de fixation pour la lame de scie.

2. Scie à chantourner selon la revendication 1, **caractérisée en ce que** le bloc-carter (42) peut être serré sur l'aile latérale de la cornière (54) de manière réglable en continu.

3. Scie à chantourner selon l'une des revendications 1 ou 2, **caractérisée en ce qu'**au moins une unité de serrage de lame de scie (22, 24) comporte un dispositif de serrage (40) pour la fixation de la lame de scie (26).

4. Scie à chantourner selon l'une des revendications 1 à 3, **caractérisée en ce que**
l'unité de serrage de lame de scie (24) inférieure comprend le moteur (30) et **en ce qu'**un élément de course passif est intégré dans le bloc-carter (42), l'extrémité supérieure de la lame de scie (26) étant fixée sur cet élément de course passif.

5. Scie à chantourner selon la revendication 4, **caractérisée en ce que** l'élément de course passif comporte une broche de course (44), au moins une douille de guidage (46, 47) pour ladite broche de course (44) et un ressort antagoniste (48), l'extrémité supérieure de la lame de scie (26) étant fixée à la broche de course (44).

6. Scie à chantourner selon la revendication 4 ou 5, **caractérisée en ce qu'**une vis de serrage (50) pour la lame de scie (26) est en outre intégrée dans le bloc-carter (42).

7. Scie à chantourner selon l'une des revendications 1 à 6, **caractérisée en ce qu'**un soufflet (70) est intégré dans l'unité de serrage de lame de scie (22) supérieure de manière à ce qu'il soit actionné par le mouvement de course alternative de la lame de scie (26).

8. Scie à chantourner selon la revendication 7, **caractérisée par** un patin de guidage (28) équipé d'une tige (64) conçue comme un tube, communiquant avec le soufflet (70), le patin de guidage (28) comportant une sortie d'air (66) en direction de la lame de scie (26).
